# EUROPEAN PATENT SPECIFICATION

(11) **EP 1 482 215 B1**
(45) Date of publication and mention of the grant of the patent: **04.10.2006**
(21) Application number: 03012396.2
(22) Date of filing: 30.05.2003
(51) Int. Cl.: F16H 61/00

(54) **Hydraulic arrangement for a vehicular transmission**
Hydraulische Anordnung für Fahrzeuggetriebe
Agencement hydraulique pour transmission véhiculaire

(43) Date of publication of application: 01.12.2004
(73) Proprietor: ROBERT BOSCH GMBH, 70442 Stuttgart (DE)
(72) Inventor: Van der Sluis, Francis Maria Antonius, 5271 HP Sint-Michielsgestel (NL); Van Wijk, Wilhelmus Johannes Maria, 5071 AN Udenhout (NL)
(74) Representative: Plevier, Gabriel Anton Johan Maria

(56) References cited:
- EP-A- 0 502 263
- WO-A1-03/087627
- DE-A- 10 209 880

## Description

The present invention relates to a hydraulic arrangement, in particular for a vehicular continuously variable transmission, as defined in the preamble of claim 1.

Such a hydraulic arrangement and transmission are generally know in the art, e.g. from the European patent publications EP-A-0 502 263 and EP-A-0 826 910. The known hydraulic arrangements are provided with an activation system that is supplied with a flow of hydraulic fluid by a pump arrangement, which pump arrangement comprises two pumps, the hydraulic connection whereof may be switched between the first and the second operational mode by means of a switching valve. In the known arrangements, one such mode is characterised by the pumps operating in parallel, i.e. both pumps discharging a flow of pressurised fluid into the main line of the activation system, whereas in the respective other operational mode the flow discharged into the main line is predominantly, i.e. effectively, determined by only one pump and/or the pressurising of said fluid is predominantly, i.e. effectively, determined by only one pump. In the latter mode, the respective other pump either discharges the said fluid from its outlet essentially directly to its inlet, i.e. operates essentially without a pressure difference between its inlet and outlet, or, alternatively, discharges the said fluid to the inlet of said one pump.

Said switching valve of the known hydraulic arrangements is electronically controlled by a pump control device using a so-called solenoid valve, i.e. an electromagnetically operated valve. The pump control device operates in dependence of one or more operating conditions of the activation system and/or the system to be activated thereby, e.g. the transmission. The pump control device is inputted with signals representative of such operating conditions, which signals are interpreted by a logically programmed part of the pump control device to determine the exact circumstances at which the pump arrangement is to be switched between the said operational modes and to effect such switching when necessary. The solenoid valve serves to convert an electronic switching signal of the pump control device into a hydraulic switching signal capable of operating the switching valve.

Generally speaking, such switching between said operational modes is desired to reduce a driving power required by the pump arrangement when only a relatively small flow of hydraulic fluid is required by the activation system, i.e. a flow that can be discharged by the operation of only one of the pumps. The power consumption of the respective other pump may then be reduced by minimising a pressure difference between the lower pressure inlet for hydraulic fluid, i.e. the pump suction port, and the higher pressure outlet therefor, i.e. the pump discharge port, of said respective other pump, e.g. by providing a direct hydraulic connection there between. Therefore, the above-mentioned operating conditions generally relate to and/or are representative of the flow of hydraulic fluid that is required by the activation system and usually include the pressure level in the main line, which pressure can only be maintained at a desired level when the flow discharged by the pump arrangement is equal to or exceeds the such required flow.

Although the known system is capable of conserving driving power by actively switching between the said operational modes of the pump arrangement during operation of the activation system, it has been found in practice that it is difficult to effect such switching at exactly the right instance, so that in practice either the power conservation may not be at an optimum or the available flow of hydraulic fluid may become critical or even fall short of what is required by the activation system. According to the invention this problem is mainly due to the difficulties and impossibilities experienced in programming the control logic of the pump control device. As an example hereof, it is mentioned that generally only a limited number of signals representative of the operating conditions are available for being inputted in the pump control device, such that it is impossible to accurately determine the flow of hydraulic fluid actually required by the activation system, at least not under all possible circumstances. A further example is that in the continuously variable transmission such actually required flow may change relatively rapidly, e.g. when a rapid transmission ratio change is initiated. It has been found difficult to match such rapid change by an equally rapid switching between the said operational modes of the pump arrangement using the known pump control device. Finally, it is remarked that the known pump control device is relatively expensive, as it requires electronic logic, programming as well as solenoid valve.

Further, the non-prepublished International patent application PCT/DE03/01194 is comprised in the state of the art in accordance with Art. 54(3) EPC. This document shows a similar hydraulic system also provided with a switchable pump arrangement, wherein said switching occurs in dependence on a pressure in the discharge path of the activation system, which pressure is effected by means of a passive hydraulic restriction provided in the discharge path and which pressure thus varies in dependence on the amount of flow of hydraulic medium therein.

It is accordingly an object of the present invention to provide for an hydraulic arrangement with an improved switchable pump arrangement that provides a more accurate operation and preferably also is less expensive compared to the known pump control device. According to the invention such object is achieved in a favourable manner in the arrangement according to claim 1.

The switching valve according to the invention is controlled in accordance with a further pressure level that is controlled in a subsequent line section of the activation system that is supplied with a surplus flow of hydraulic fluid by the main line pressure relieve valve, instead of in accordance with the main line pressure itself. When the flow of hydraulic fluid discharged by the pump arrangement into the main line is insufficient to support the regular operation of the entire activation system, the above-mentioned surplus flow from the main line into the subsequent line section will reduce, potentially to such a low level that the said further pressure level can not be maintained. I.e. a drop in the said further pressure level is predictive of an imminent loss of main line pressure. This pressure drop is used to switch the pump arrangement from the said first operational mode to the said second operational mode providing an increased flow of hydraulic fluid that is pumped into the main line and the imminent pressure drop in the main line pressure will not occur. This of course has the advantage that the main line pressure is maintained at its required level and the critical functions of the system to be activated can be effectively performed.

According to the invention said further pressure may be effected especially for the above-explained purpose. Alternatively, a pressure-level in the activation system other than the line pressure may serve as the further pressure. Preferably the lowest controlled pressure level in the activation system, which is generally used for lubrication purposes, may be applied for this purpose as this pressure level will normally be the first pressure to be affected when the flow of fluid supplied by the pump arrangement to the activation system is insufficient to support its full operation.

The invention also provides the option to perform the switching of the pump arrangement in an entirely hydraulic and particular cost effective manner, i.e. without requiring an electronic pump control device including the solenoid valve. According to the invention such advantage is realised by providing the switching valve of the pump arrangement with a hydraulic activation line that connects to the activation system at the line section where said further pressure level prevails.

The invention will now by way of example be elucidated further along a drawing in which:
Figure 1 is a prior art scheme of a hydraulic arrangement for a continuously variable transmission provided with a hydraulic activation system and a switchable pump arrangement with two pumps;
Figure 2 is a graphical representation of a flow of hydraulic fluid generated by the known pump arrangement;
Figure 3 illustrates an improvement of the arrangement of figure 1 according to a first embodiment of the invention in which the switching of the pump arrangement is controlled in dependence of a lubrication pressure prevailing in the activation system.
Figure 4 illustrates a second embodiment of the invention in combination with a hydraulic arrangement provided with another known pump arrangement;
Figure 5 illustrates a third embodiment of the invention as applied to yet another known pump arrangement;
Figure 6 illustrates a fourth embodiment of the invention in combination with a hydraulic arrangement provided with a novel pump arrangement;
Figure 7 illustrates a sixth embodiment of the invention in combination with yet another novel pump arrangement; and
Figure 8 represents a modification of the figure 7 embodiment of the invention.

In the figures, identical reference numbers relate to identical or at least comparable technical features. The hydraulic valves in the arrangements depicted in the figures are schematically indicated and are of generally known construction, i.e. provided with a valve body movably provided in a housing for making and breaking, or even throttling one or more hydraulic connections between two or more hydraulic lines. The valves may be operated, i.e. the position of the valve body may be influenced, either by one or more pressure levels applied to the valve by activation lines, which are represent by dotted lines, by a spring, which is represented by a zigzag line, or by a solenoid valve, which is represented by a dark triangle in a rectangle.

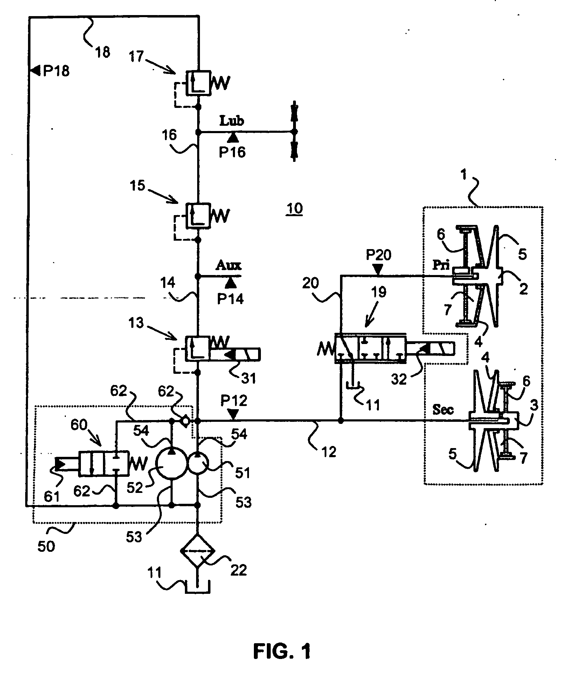

Figure 1 shows a continuously variable transmission 1 for a motor vehicle and a hydraulic arrangement 10, 50 therefor according to the known art. Although the invention is illustrated in combination with this particular type of transmission 1, it can in fact be applied in hydraulic arrangements 10, 50 having a switchable pump 50 arrangement in general.

The continuously variable transmission 1 is provided with a primary pulley 2, which may for example be driven by an engine of a motor vehicle (not depicted), and a secondary pulley 3, which may for example drive the driven wheels of such vehicle (not depicted), and which are mutually connected by a drive belt (not depicted). Each pulley comprises a fixed conical disc 5 and an axially movable conical disc 4. Each movable disc 4 may be urged toward the fixed disc 5 of the respective pulley 2, 3 by means of a hydraulic pressure prevailing and exerted in a cylinder space 7 and a piston 6, whereby the pressure level and pressure ratio of such primary and secondary pulley pressures determine and activate the operation of the transmission. The hydraulic arrangement 10, 50 is provided to control the pulley pressures towards a respectively desired level.

The known hydraulic arrangement 10, 50 comprises a pump arrangement 50 that hydraulically connects and discharges, i.e. supplies, a flow of hydraulic fluid into a main line 12 of a hydraulic activation system 10. Although several types of activation systems are known, the invention is illustrated in combination with a so-called master/slave activation system 10, wherein the pressure in the main line 12, the main line pressure P12, is controlled by a solenoid operated main line pressure relieve valve 13. The main line pressure P12 serves as the secondary pulley pressure; i.e. the main line 12 hydraulically connects to the cylinder space 7 of the secondary pulley 3. A solenoid operated further or transmission ratio control valve 19 is hydraulically connected to the main line 12 and is used to control the primary pulley pressure P20 in a hydraulic line 20 that hydraulically connects to the cylinder space 7 of the primary pulley 2 by reducing the main line pressure P12 to a level desired for the primary pulley pressure P20.

The main line pressure relieve valve 13 releases a surplus of the flow supplied by the pump arrangement 50 into a discharge path as soon as the main line pressure P12 exceeds a instantaneously required pressure level. The discharge path includes several hydraulic line sections 14, 16 and 18, separated by further relieve valves 15 and 17 and each releasing a respective surplus flow of hydraulic fluid into a next line section 14, 16 or 18. By way of example, a line section 14 is included for supplying fluid pressurised at an auxiliary pressure P14 to operate auxiliary hydraulic consumers such as transmission clutches and a subsequent line section 16 is included for supplying fluid pressurised at a lubrication pressure P16 to lubricate transmission components such as the drive belt. The relieve valve 17 for controlling the lubrication pressure P16 finally releases a respective surplus flow via a return line section 18 into a so-called oil sump 11 that is operated at ambient, i.e. atmospheric pressure and that serves as a fluid source 11 for the pump arrangement 50.

In the illustrated hydraulic configuration the respective line sections 14, 16 and 18 of the discharge path are arranged in a so-called cascade configuration, i.e. in each line section 14, 16 and 18 a distinctive pressure level prevails that is necessarily lower than the pressure prevailing in a preceding line section 12, 14 and 16. The main line pressure P12 being the highest controlled pressure level of the activation system 10 and the lubrication pressure P16 being the lowest controlled pressure level thereof, which latter pressure P16 is generally only slightly higher -a few bar- than the ambient pressure in the fluid source 11. The activation system 10 and the pump arrangement 50 constitute a closed system for hydraulic fluid, which means that all fluid that is discharged into the main line 12 of the activation system 10 by the pump arrangement 50 finally returns to the fluid source 11 including any leakage flows.

The above-mentioned solenoid operated valves 13 and 19 thus determine and activate the operation of the transmission. They are electronically controlled by a transmission control device (not depicted) that operates in dependency of a multiple variables, such as the transmission speed ratio, the rotational speed of the primary and secondary pulleys 2, 3, a vehicle speed, a vehicle acceleration, a position etc. in a generally known manner. Hereby the transmission control device includes solenoid valves 31 and 32 for transforming electronic valve control signals generated by the transmission control device into hydraulic control signals capable of operating the valves 13 and 19 respectively.

The pump arrangement 50 supplies a flow of hydraulic fluid directly into the main line 12 of the activation system 10 at a main line pressure P12 that is determined by the main line pressure relieve valve 13, which fluid is drawn by the pump arrangement 50 either directly from the return line 18 of the discharge path or from the fluid source 11, whereby a fluid filter 22 may be present between the fluid source 11 and the pump arrangement 50. The pump arrangement 50 comprises two pumps 51 and 52 each having a suction port or inlet 53 and a discharge port or outlet 54 for drawing respectively discharging hydraulic fluid.

The hydraulic connection of the pumps 51 and 52 in the pump arrangement 50 known from EP-A-0 502 263 and shown in figure 1 is such that they may be switched between a first and a second operational mode by means of control means 60-69 including a switching valve 60 operated by an electronically controlled solenoid valve 61. In the second operational mode the pumps 51 and 52 operate in parallel, i.e. both pumps 51, 52 discharge a flow of hydraulic fluid into the main line 12 of the activation system 10 (in which second mode the switching valve 60 is depicted in figure 1), whereas in the first operational mode such flow into the main line 12 is predominantly, i.e. effectively determined by the first pump 51 alone. In this first mode, the outlet 54 of the second pump 52 is directly connected to its inlet 53 by means of feed-back line sections 62, such that this second pump 52 operates essentially without pressurising hydraulic fluid and will thus require hardly any driving power. A one way valve 63 is provided between the outlet 54 of the second pump 52 and the main line 12 to ensure a proper operation of the pump arrangement 50 in both operational modes. This known pump arrangement 50 is referred to as the single/dual-arrangement.

It is remarked that it is known to incorporate the pumps 51, 52 into one single pump construction, especially in case of the so-called roller vane or blade vane pump types. It is also known to drive the pumps 51, 52 by a single source of driving power. Such source of driving power may be a dedicated electric motor, but it is also known to branch of a driving power required by the pump arrangement 50 from the combustion engine of the motor vehicle in which the arrangement 50 may be applied. It is in particular a pump arrangement 50 with two or more pumps 51, 52 that are simultaneously driven by the engine of the motor vehicle to which the present invention relates, because in case of separately and/or dedicatedly driven pumps alternative methods for conserving driving power are available.

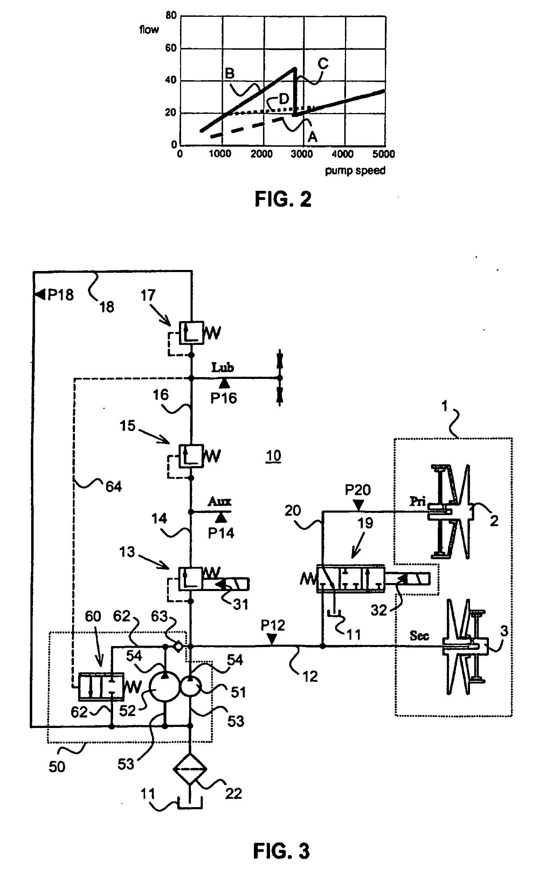

In figure 2 an example of a pump-arrangement 50 yield, i.e. the flow of hydraulic fluid discharged into the main line 12 is depicted in relation to a rotational speed at which the pumps 51, 52 of the arrangement 50 are driven. Line A denotes the said flow in the first operational mode and line B in the second operational mode. In this example, the activation system 10 requires a minimum flow of 20, hence the pump arrangement 50 is switched (transition line C) between the second operational mode (line B) and the energy conserving first operational mode (line A) at a critical pump speed of about 2800. It is remarked that in practice the said critical pump speed may vary in dependence of the operating conditions of the transmission 1 such as for example the level of the main line pressure P12. Therefore, a pump control device (not depicted) is provided, which is inputted with signals representative of the relevant operating conditions, which determines when the pump arrangement 50 is to be switched between the said operational modes and which activates the solenoid valve 61 to effect a hydraulic pressure for controlling switching valve 60 that engages a particular operational mode of the pump arrangement 50 in accordance therewith.

This known hydraulic arrangement 10, 50 and in particular the pump arrangement 50 thereof is suited for conserving power, in particular at a relatively high pump speed, but also comes with the problems and disadvantages that were set out in the above.

In figure 3 a first embodiment of the invention is illustrated, which departs from the known pump arrangement 50 depicted and discussed as figure 1. In the arrangement 50 according to the invention, the switching valve 60 is controlled in accordance with a further pressure level P14 or P16 that is controlled in a line section 14 or 16 of the activation system 10 that receives a surplus flow of hydraulic fluid released into the discharge path by the main line pressure relieve valve 13. Hereby such control is realised by an activation line 64 of the control means 60-69 for switching the pump arrangement 50 that allows the said further pressure P14; P16 to activate the switching valve 60. In particular the said further pressure P14; P16 is applied to the valve body of the switching valve 60 and effects a control force thereon, which force acts against an oppositely directed spring force. When the flow supplied by the pump arrangement 50 to the main line 12 in the first operational mode is sufficient for the regular, i.e. full and normal, operation of the activation system 10, the said further pressure P14; P16 is at its normal, i.e. desired level and the control force is sufficient to counteract the said spring force. In this situation the switching valve 60 together with the feed-back line sections 62 provides a hydraulic connection directly from the outlet 54 of the second pump 52 to its inlet 53 and the pump arrangement 50 is in the said first operational mode. However, when for some reason the said flow becomes insufficient, the activation system 10 can not maintain the said further pressure P14; P16 at its normal level and the control force will reduce accordingly, allowing the spring force to shift the valve body of the switching valve 60 (to the left in figure 3). The pump arrangement 50 thereby switches from the first to the second operational mode, wherein the switching valve 60 blocks the hydraulic connection between the outlet 54 and the inlet 53 of the second pump 52 and wherein both pumps 51 and 52 operate in parallel (in which second mode the switching valve 60 is depicted in figure 3) both effectively supplying their discharge flow into the main line 12.

In a preferred embodiment the lowest controlled pressure level in the activation system 10, i.e. the lubrication pressure P16, serves as the said further pressure level. This is considered advantageous, because a temporary drop in the lubrication pressure P16 is not normally detrimental to the operation of the activation system 10 or the system to be activated. Moreover, such lowest controlled pressure level will normally be the first controlled pressure P16 that can not be maintained at its desired level by the activation system 10, thereby favourably predicting an imminent drop in the main line pressure P12 that can thus be maintained by the timely switching between the said operational modes of the pump arrangement 50. Thus, with the hydraulic arrangement 10, 50 according to the invention, the main line pressure P12 may be maintained at its required level and the critical functions of the system to be activated are secured.

By the provision of such steering connection 64 between switching valve 60 and the discharge line section 16 with a derived pressure P16, the second pump 52 is switched-on immediately when necessary, i.e. is switched-on timely. In practice this means that an energy profit is gained, since at the known electronic control, interpretation of signals, the time required between pick up, interpretation and delivery of signals and safety margin and time that is normally applied, result in a too early switching-on of the second pump 52. Apart from the improvement in robustness and efficiency of the hydraulic arrangement 10, 50 thus gained by the new switching method, the latter also has the economical advantage that the solenoid valve 61 is no longer needed.

Further, by applying a proportional type switching valve 60, a gradual switching between the said first and second operational modes may favourably be obtained in dependence of the said further pressure level, e.g. the lubrication pressure P16, which is, by way of example, indicated by dotted line D in figure 2. This type switching has the advantage that the sudden change in the discharge flow of the pump arrangement 50 and a pressure fluctuation possibly associated therewith, which would occur during the prior art type switching of the pump arrangement 50 following the transition line C in figure 2, are largely avoided.

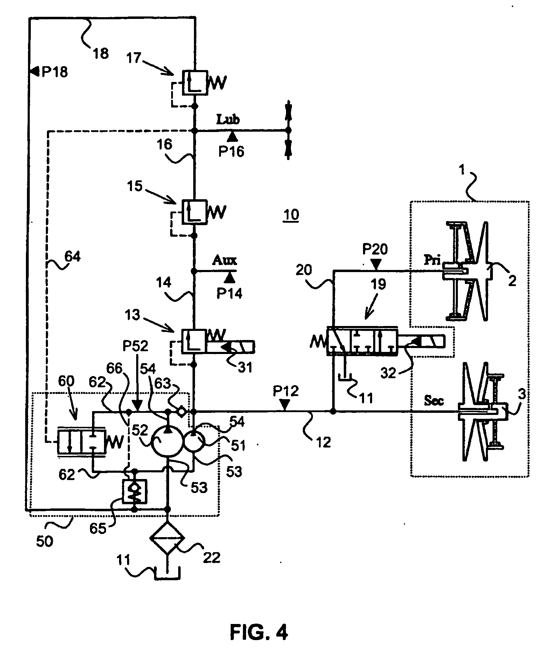

Figure 4 shows a second embodiment of the present invention, which is applied to a different type of pump arrangement 50 and which in itself is known from EP-A-0 826 910. In this arrangement 50 too, the pumps 51 and 52 may operate in parallel, i.e. both pumps 51, 52 discharging a flow of hydraulic fluid into the main line 12 of the activation system 10, in the second operational mode (which second mode is depicted in figure 4), whereas in the first operational mode the flow effectively supplied to the main line 12 is predominantly determined by the first pump 51 alone. In this first operational mode, the outlet 54 of the second pump 52 is hydraulically connected to the inlet 53 of the first pump 51 by means of feedback line sections 62. Further, a spring biased one way valve 65 is present between the inlet 53 of the first pump 51 and the fluid source 11 to limit an outlet pressure P52 of the second pump 52 in the first operational mode and to allow fluid from the fluid source 11 to be drawn to the inlet 53 of the first pump 51 in the second operational mode. In both said operational modes the spring biased one way valve 65 is hydraulically activated, i.e. opened by the pressure P52 prevailing at the outlet 54 of the second pump 52, whereto a further activation line 66 is provided hydraulically connecting this valve 65 with the outlet 54 of the second pump 52. This particular pump arrangement is referred to as the series/parallel-arrangement.

In this known series/parallel-arrangement the second pump 52 serves as a booster pump for the first pump 51 slightly pressurising the inlet 53 thereof in the first operational mode, thereby reducing a pressure difference between the inlet 53 and the outlet 54 of the second pump 52. Thus the second pump 52 will require hardly any driving power in this mode. Moreover, because by pressurising the inlet 53 of the first pump 51 the pressure difference between its inlet 53 and outlet 54 is reduced, the driving power required for this pump 51 is reduced too. Further advantages and uses of such pump arrangement 50 with respect to the figure 1 arrangement are described in the known art.

The invention proposes to control the switching valve 60 in accordance with a further pressure level P14 or P16 that is controlled in a line section 14 or 16 of the activation system 10 that receives the surplus flow of hydraulic fluid released by the main line pressure relieve valve 13, in stead of the known electronically controlled operation thereof. In the arrangement 50 according to the invention such hydraulic control is realised by an activation line 64 of the control means 60-69 for switching the pump arrangement 50 that allows the said further pressure P14; P16 to activate the switching valve 60. Otherwise, the control means 60-69 according to the second embodiment of the invention operates similar to the control means 60-69 according to the first embodiment.

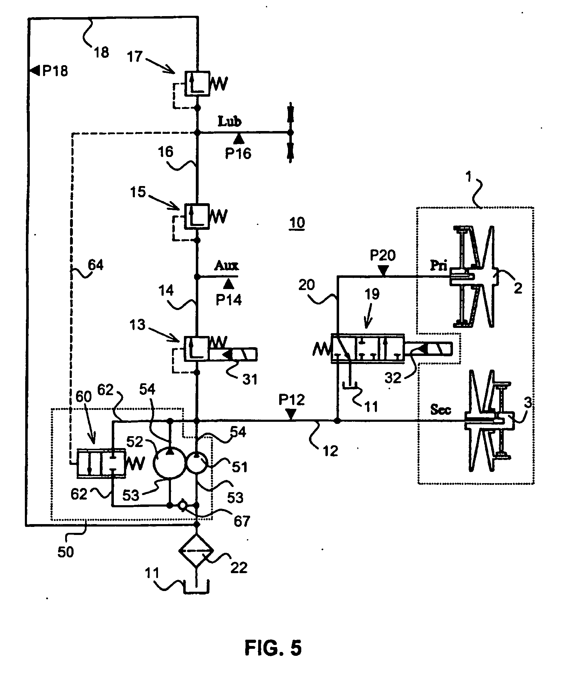

In figure 5 a third embodiment of the invention is illustrated, which departs from a novel pump arrangement 50. This novel pump arrangement 50 provides a first and second operational mode similar to and having the advantages of the pump arrangement 50 depicted in and discussed with reference to figure 3. The application of such novel arrangement 50 is, however, not limited to the control of the switching valve 60 in accordance with the invention by means of the activation line 64. Rather, the novel pump arrangement 50 may also be advantageously applied in combination with a conventionally operated switching valve 60, i.e. operated by means of an electronically controlled solenoid valve 61 and based on the actual level of the line pressure P12 in relation to a desired level therefor. The novel pump arrangement 50 according to the present invention solves a further problem associated with the arrangement 50 known from EP-A-0 502 263.

The pump arrangements 50 according to figures 1 or 3 have the disadvantage that in the first operational mode both the inlet 53 and the outlet 54 of the second pump 52 is hydraulically connected to the fluid source 11, i.e. are maintained at a relatively low pressure level, usually ambient pressure. Because of this feature the phenomenon of cavitation can occur, i.e. due to the suction of the second pump 52 the pressure prevailing at its inlet 53 can fall below a critical level at which vacuum or vapour bubbles are created within the hydraulic fluid. These bubbles subsequently implode, causing unwanted noise as well as unnecessary wear of the pump arrangement 50. Further, it has been found in practice that at switching between the said first and second operational modes, the line pressure P12 may fluctuate undesirably, probably because the one way valve 63 between the outlet 54 of the second pump 52 and the main line 12 only closes or opens passively in response to a pressure change, i.e. a pressure change or fluctuation is in fact required for the normal operation of a one way valve.

The invention therefore proposes to provide a passively working one way valve 67 at a location where the said pressure fluctuation due to the switching between the operational modes is less disadvantageous. In this third embodiment of the invention, the one way valve 67 of the control means 60-69 is thus arranged between the inlet 53 of the second pump 52 and the fluid source 11, allowing a flow of hydraulic fluid from the fluid source 11 to the said inlet 53 in the said second operational mode and blocking a reversely directed flow from the said inlet 53 to the fluid source 11 in the first operational mode. Hereby, the switching valve 60 is arranged to hydraulically connected the outlet 54 of the second pump 52 to its inlet 53 in the first operational mode and to hydraulically disconnected the outlet 54 of the second pump 52 from its inlet 53 in the second operational mode (in which second mode the switching valve 60 is depicted in figure 5). Thus in the first operational mode there is no pressure difference between the inlet 53 and the 54 of the second pump 52 and this pump 52 effectively provides no contribution to the pressurising of the flow of hydraulic fluid supplied by pump arrangement to the main line 12 of the activation system 10, whereas in the second operational mode both pumps 51, 52 operate in parallel providing a flow of pressurised fluid to the main line 12.

The switching between the operational modes of the pump arrangement 50 according to the present embodiment is effected with the least possible disturbance of the main line pressure P12. Moreover, the above-mentioned phenomenon of cavitation does not occur at the second pump 52 as it idles at the relatively high line pressure P12 in the first operational mode, i.e. its inlet 53 and its outlet 54 are hydraulically connected directly to the main line 12.

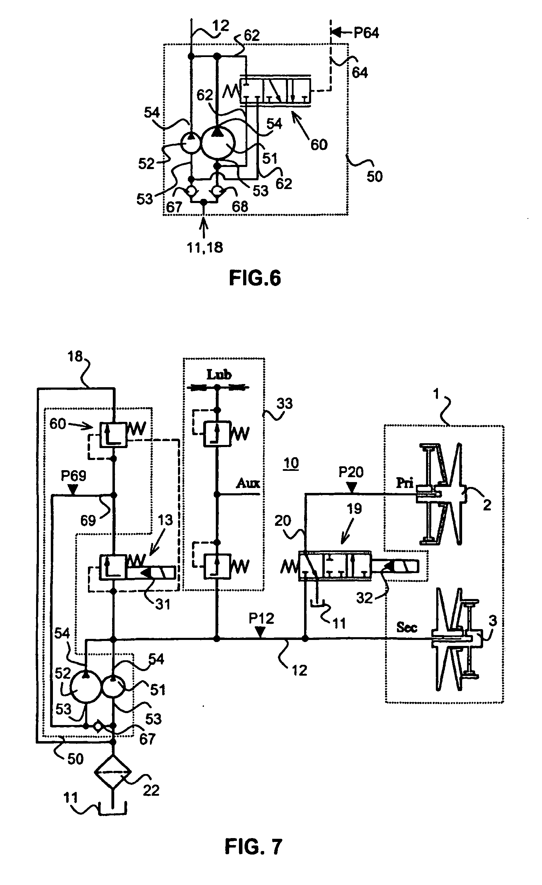

Figure 6 illustrates a modified construction of the pump arrangement 50 in accordance with the third embodiment of the invention and discussed with reference to figure 5. This modified construction is characterised in that the pump arrangement 50 can be switched between three operational modes, i.e. two modes wherein either only one of both pumps 51 or 52 is effectively supplying a flow of hydraulic fluid to the main line 12 and a further mode wherein both pumps 51 and 52 operate in parallel, both supplying fluid to the main line 12. This arrangement is particularly relevant when both pumps 51 and 52 of the pump arrangement 50 each supply a different amount of flow of hydraulic fluid when operated, i.e. driven at a particular pump speed. The flow effectively supplied by the pump arrangement 50 to the main line 12 at any given pump speed can then be even more accurately adjusted to the instantaneous flow actually required by the activation system 10.

In the figure 6 embodiment the one way valve 67 is arranged between the inlet 53 of the second pump 52 and the fluid source 11 and a further one way valve 68 is arranged between the inlet 53 of the first pump 51 and the fluid source 11, allowing a flow of hydraulic fluid from the fluid source 11 to the respective pump inlet 53 when the respective pump 51 or 52 is effectively supplying a flow of hydraulic fluid to the main and blocking a reversely directed flow. The switching valve 60 is arranged to hydraulically connect either the outlet 54 of the second pump 52 to its inlet 53, the outlet 54 of the first pump 51 to its inlet 53 or to disconnected both of the forementioned hydraulic connections in the operational mode wherein both pumps effectively discharge a flow of hydraulic fluid into the main line 12 (which mode is depicted in figure 6). Activation line 64 is provided to effect the switching 60 of the pump arrangement 50 such that both pumps 51, 52 operate in parallel when the pressure P64 prevailing in the activation line 64 is relatively low, that the flow effectively discharged into the main line 12 is predominantly determined by the operation of the pump 51 supplying the largest amount of flow at a particular pump speed when the said pressure P64 is at an intermediate level and that such flow is predominantly determined by the operation of the pump 52 supplying the smallest amount of flow at a particular pump speed when the said pressure P64 is relatively high. Of course, also in this particular construction of the pump arrangement 50 the conventionally, i.e. solenoid, operated switching valve 60 may be applied.

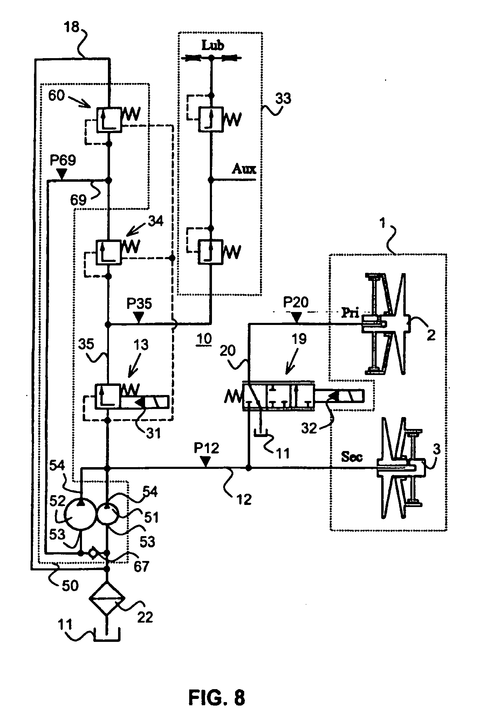

Figure 7 and 8 schematically demonstrate a further improvement of the hydraulic arrangement 10, 50 and control means 60-69 in accordance with the present invention. The constructions according to figures 7 and 8 are characterised by the feature that the switching valve 60 is provided as a pressure control or further relieve valve in the discharge path of the main line pressure relieve valve 13, wherein a surplus of the flow supplied by the pump arrangement 50 is released and which discharge path comprises at least two hydraulic line sections 69 and 18 separated by the switching valve 60. The switching valve 60 is arranged such that it controls a feed pressure P69 in a feed line section 69 of the discharge path to a level only slightly below the main line pressure P12 in the main line 12, e.g. about 0,5 to 1.5 bar lower and preferably less than 1 bar. This arrangement of the switching vale 60 may be realised in a generally known manner, e.g. by providing it with pressure feedback from both the line pressure P12 and the feed pressure P69 as indicated by the dashed lines in figures 7 and 8.

In this example, the switching valve 60 releases any surplus flow of hydraulic fluid via the return line section 18 directly into the fluid source 11. The feed line section 69 hydraulically connects to the inlet 53 of the second pump 62. Further, the one way valve 67 of the control means 60-69 is arranged between the inlet 53 of the second pump 52 and the fluid source 11.

Now in the above-described hydraulic arrangements 10, 50, when the flow of hydraulic fluid provided by first pump 51 of the pump arrangement 50 is sufficient for the regular operation of the activation means 10, the main line pressure relieve valve 13 will also release sufficient flow into the feed line 69 for the switching valve 60 to maintain the feed pressure P69 at the desired level. In this situation the inlet 53 of the second pump 54 is thus maintained at the feed pressure P69 of the second pump 54 as it receives pressurised fluid through the feed line 69, whereby the one way valve 67 of the control means 60-69 blocks a flow of hydraulic fluid between the feed line and the fluid source 11. Thus in this first operational mode there is almost no pressure difference between the inlet 53 and the 54 of the second pump 52 and this pump 52 provides only an accordingly small contribution to the pressurising of the flow of hydraulic fluid supplied by pump arrangement to the main line 12 of the activation system 10. Accordingly, the second pump 52 will require hardly any driving power in this first operational mode.

When the activation means 10 require a flow of hydraulic fluid for their regular operation that is larger than the flow provided by first pump 51 alone, the main line pressure relieve valve 13 will no longer release a sufficient flow into the feed line 69 and the switching valve 60 can not maintain the feed pressure P69 at the desired level of 0,5 to 1,5 bar less than the line pressure P12. In this situation the feed pressure P69 will drop below ambient pressure by the pumping action of the second pump 52 at which instance the one way valve opens allowing flow of hydraulic fluid from the fluid source 11 to the inlet 53 of the second pump 52. This situation represent the second operational mode of the pump arrangement 50 wherein both pumps 51, 52 operate in parallel pressurising and discharging a flow of hydraulic fluid into the main line 12 of the activation system 10.

With such further improvement of the hydraulic arrangement 10, 50 the switching between the said first and second operational modes of the pump arrangement 50 is performed even more smoothly and reliably, i.e. virtually without disturbing the main line pressure level P12, whilst in the first operational mode cavitation at the second pump 52 is effectively avoided. Of course the current arrangement also comes with the previously mentioned advantages and benefits associated with the invention.

In figure 7 the fluid supply for the auxiliary hydraulic consumers and lubrication is realised by a separate hydraulic subsystem 33, which is hydraulically connected to the main line 12. In this particular construction the subsystem 33 branches-off a demand based flow of hydraulic fluid from the main line 12, which may compromise the flow available for the activation and operation of the system to be activated, i.e. the transmission 1, especially when only a small flow is supplied by the pump arrangement at a relatively low pump speed. Accordingly, it may be considered advantageous to provide a flow to the subsystem 33 only after the system to be activated has been sufficiently supplied with hydraulic in case the activation and operation thereof is less critical, as is for example true for the transmission 1. In figure 8 an accordingly modified construction of the hydraulic arrangement 10, 50 is provided. In this construction an additional pressure control valve 34 and associated additional hydraulic line section 35 are provided before the feed line section 69 in the discharge path of the line pressure relieve valve 13, whereby the said subsystem 33 is hydraulically connected to the additional hydraulic line section 35. To minimise the pressure difference between the inlet 53 and the 54 of the second pump 52 in the first operational mode, also the additional pressure control valve 34 is preferably arranged such that it controls a additional hydraulic line section pressure P35 to a level only slightly below the main line pressure P12 in the main line 12.

## Claims

1. Hydraulic arrangement (10, 50) comprising a hydraulic activation system (10) for activating a system to be activated, in particular a continuously variable transmission (1) such as for people or load carrying vehicles comprising a primary pulley (2), a secondary pulley (3) with a drive belt provided there between, the hydraulic arrangement (10, 50) also comprising a pump arrangement (50) for discharging a flow of pressurised hydraulic fluid from a fluid source (11) into a main line (12) of the activation system (10), wherein a main line pressure (P12) is controlled via a main line pressure relieve valve (13) that releases a surplus of said flow of hydraulic fluid into a discharge path (14, 16, 18), the pump arrangement (50) comprising at least a first pump (51) and a second pump (52), the hydraulic connection whereof may be switched between a first and a second operational mode of the pump arrangement (50) by means of a control means (60-69) of the pump arrangement (50), **characterised in that**, the control means (60-69) is arranged for switching the hydraulic connection of the pumps (51, 52) between the first and second operational modes thereof in dependence of a pressure level (P14, P16) that is controlled in the discharge path (14, 16, 18).

2. Hydraulic arrangement (10, 50) according to claim 1, **characterised in that**, in the first operational mode the flow of hydraulic fluid effectively discharged by the pump arrangement (50) into the main line (12) is predominantly determined by the operation of only the first pump (51) and **in that** in the second operational mode the said flow is determined by both pumps (51, 52) operating in parallel.

3. Hydraulic arrangement (10, 50) according to claim 1, **characterised in that**, in the first operational mode a difference between a hydraulic pressure prevailing at an inlet (53) and at an outlet (54) for hydraulic fluid of the second pump (52) is considerably less than such pressure difference for the first pump (51) and **in that** in the second operational mode the said pressure differences are approximately equal.

4. Hydraulic arrangement (10, 50) according to claim 1, 2 or 3, **characterised in that**, said switching is effected by means of a switching valve (60) that is hydraulically activated by the pressure level (P14, P16, P18) in the discharge path (14, 16, 18) by means of an activation line (64) of the control means (60-69) hydraulically connecting the switching valve (60) with a respective section (14, 16 or 18) of the discharge path (14, 16, 18).

5. Hydraulic arrangement (10, 50) according to claim 4, **characterised in that**, the discharge path (14, 16, 18) is provided with a multiplicity of relieve valves (15, 17) for realising a cascade of controlled pressure levels (P14; P16) in respective sections (14; 16) of the discharge path (14, 16, 18) and that the activation line (64) connects to the discharge path (14, 16, 18) at a section (16) thereof wherein a lowest controlled pressure level (P16) in the arrangement (10, 50) prevails.

6. Hydraulic arrangement (10, 50) according to any one of the preceding claims, wherein:
- both pumps (51, 52) are provided with an inlet (53) and with an outlet (54),
- a one way valve (63) is provided between the outlet (54) of the second pump (52) and the main line (12), allowing a flow of hydraulic fluid from the said outlet (54) into the main line (12) and blocking a reversely directed flow, and wherein
- the switching valve (60) is arranged to hydraulically connected the outlet (54) of the second pump (52) to its inlet (53) in the said first operational mode and to hydraulically disconnected the outlet (54) of the second pump (52) from its inlet (53) in the said second operational mode.

7. Hydraulic arrangement (10, 50) according to any one of the preceding claims, wherein:
- both pumps (51, 52) are provided with an inlet (53) and with an outlet (54),
- a one way valve (63) is provided between the outlet (54) of the second pump (52) and the main line (12), allowing a flow of hydraulic fluid from the said outlet (54) into the main line (12) and blocking a reversely directed flow,
- a spring biased one way valve (65) is provided between the inlet (53) of the first pump (51) and the fluid source (11) that is hydraulically activated by a pressure (P52) prevailing at the outlet (54) of the second pump (52) by means of a further activation line (66) of the control means (60-69) hydraulically connecting this valve (65) with the outlet (54) of the second pump (52), allowing or blocking a flow of hydraulic fluid from the fluid source (11) to the inlet (53) of the first pump (51) in dependence of the said pressure (P52), and wherein
- the switching valve (60) is arranged to hydraulically connected the outlet (54) of the second pump (52) to the inlet (53) of the first pump (51) in the said first operational mode and to hydraulically disconnected said outlet (54) from the said inlet (53) in the said second operational mode.

8. Hydraulic arrangement (10, 50) according to any one of the preceding claims, wherein:
- both pumps (51, 52) are provided with an inlet (53) and with an outlet (54),
- a one way valve (67) is provided between the inlet (53) of the second pump (52) and the fluid source (11), allowing a flow of hydraulic fluid from the fluid source (11) to the said inlet (53) and blocking a reversely directed flow, and wherein
- the switching valve (60) is arranged to hydraulically connected the outlet (54) of the second pump (52) to its inlet (53) in the said first operational mode and to hydraulically disconnected the outlet (54) of the second pump (52) from its inlet (53) in the said second operational mode.

9. Hydraulic arrangement (10, 50) according to any one of the preceding claims, wherein:
- both pumps (51, 52) are provided with an inlet (53) and with an outlet (54),
- a one way valve (67) is provided between the inlet (53) of the second pump (52) and the fluid source (11), allowing a flow of hydraulic fluid from the fluid source (11) to the said inlet (53) in the said second operational mode and blocking a reversely directed flow in the said first operational mode,
- the switching valve (60) is arranged as a relieve valve (14, 15) controlling a pressure level (P14; P16) in a respective section (14; 16) of the discharge path (14, 16, 18), and wherein
- the inlet (53) of the second pump (52) is hydraulically connected to the said respective section (14; 16).

10. Hydraulic arrangement (10, 50) according to claim 9, **characterised in that** the pressure level (P14; P16) controlled by the switching valve (60) is controlled in dependence of the main line pressure (P12).

11. Hydraulic arrangement (10, 50) according to claim 10, **characterised in that** the pressure level (P14; P16) controlled by the switching valve (60, 14) is controlled to be slightly less than the main line pressure (P12), preferably between 0.5 and 1,5 bar less.

12. Hydraulic arrangement (10, 50) according to any one of the preceding claims, **characterised in that** the switching valve (60) is a proportional valve that provides a gradual switching between the said first and second operational modes in dependence of the said pressure level (P14, P16, P18) in the discharge path (14, 16, 18).

## Patentansprüche

1. Hydraulische Anordnung (10, 50) mit einem hydraulischen Aktivierungssystem (10) zur Aktivierung eines zu aktivierenden Systems, insbesondere eines stufenlosen Getriebes (1), wie zum Beispiel für Fahrzeuge zur Beförderung von Personen oder Last, mit einer Primärrolle (2), einer Sekundärrolle (3) mit einem dazwischen vorgesehenen Antriebsriemen, wobei die hydraulische Anordnung (10, 50) des Weiteren eine Pumpenanordnung (50) zur Abführung eines Stroms von hydraulischem Druckfluid von einer Fluidquelle (11) in eine Hauptleitung (12) des Aktivierungssystems (10) umfasst, wobei ein Hauptleitungsdruck (P12) über ein Hauptleitungsdruckentlastungsventil (13) gesteuert wird, das einen Hydraulikfluidstromüberschuss in einen Abführweg (14, 16, 18) abgibt, wobei die Pumpenanordnung (50) mindestens eine erste Pumpe (51) und eine zweite Pumpe (52) umfasst, wobei deren hydraulische Verbindung mittels eines Steuermittels (60-69) der Pumpenanordnung (50) zwischen einem ersten und einem zweiten Betriebsmodus der Pumpenanordnung (50) geschaltet werden kann, **dadurch gekennzeichnet, dass** das Steuermittel (60-69) zum Schalten der hydraulischen Verbindung der Pumpen (51, 52) zwischen ihrem ersten und zweiten Betriebsmodus in Abhängigkeit von einer im Abführweg (14, 16, 18) gesteuerten Druckhöhe (P14, P16) angeordnet ist.

2. Hydraulische Anordnung (10, 50) nach Anspruch 1, **dadurch gekennzeichnet, dass** im ersten Betriebsmodus der Hydraulikfluidstrom, der durch die Pumpenanordnung (50) praktisch in die Hauptleitung (12) abgeführt wird, in erster Linie durch den Betrieb nur der ersten Pumpe (51) bestimmt wird und dass der Strom im zweiten Betriebsmodus durch beide parallel arbeitenden Pumpen (51, 52) bestimmt wird.

3. Hydraulische Anordnung (10, 50) nach Anspruch 1, **dadurch gekennzeichnet, dass** im ersten Betriebsmodus eine Differenz zwischen einem an einem Einlass (53) und an einem Auslass (54) für Hydraulikfluid der zweiten Pumpe (52) herrschenden Hydraulikdruck viel kleiner ist als solch eine Druckdifferenz für die erste Pumpe (51) und dass im zweiten Betriebsmodus die Druckdifferenzen ungefähr gleich sind.

4. Hydraulische Anordnung (10, 50) nach Anspruch 1, 2 oder 3, **dadurch gekennzeichnet, dass** das Schalten mittels eines Schaltventils (60) erfolgt, das durch die Druckhöhe (P14, P16, P18) im Abführweg (14, 16, 18) mittels einer Aktivierungsleitung (64) des Steuermittels (60-69) hydraulisch aktiviert wird, die das Schaltventil (60) mit einem jeweiligen Abschnitt (14, 16 oder 18) des Abführwegs (14, 16, 18) hydraulisch verbindet.

5. Hydraulische Anordnung (10, 50) nach Anspruch 4, **dadurch gekennzeichnet, dass** der Abführweg (14, 16, 18) mit einer Vielzahl von Entlastungsventilen (15, 17) zur Herstellung einer Kaskade von gesteuerten Druckhöhen (P14; P16) in jeweiligen Abschnitten (14; 16) des Abführwegs (14, 16, 18) versehen ist und dass die Aktivierungsleitung (64) mit dem Abführweg (14, 16, 18) an einem Abschnitt (16) davon verbunden ist, wobei eine niedrigste gesteuerte Druckhöhe (P16) in der Anordnung (10, 50) herrscht.

6. Hydraulische Anordnung (10, 50) nach einem der vorhergehenden Ansprüche, bei der:
- beide Pumpen (51, 52) mit einem Einlass (53) und mit einem Auslass (54) versehen sind,
- zwischen dem Auslass (54) der zweiten Pumpe (52) und der Hauptleitung (12) ein Einwegeventil (63) vorgesehen ist, das einen Hydraulikfluidstrom von dem Auslass (54) in die Hauptleitung (12) gestattet und einen rückwärts gerichteten Strom sperrt, und bei der
- das Schaltventil (60) zur hydraulischen Verbindung des Auslasses (54) der zweiten Pumpe (52) mit ihrem Einlass (53) im ersten Betriebsmodus und zur hydraulischen Trennung des Auslasses (54) der zweiten Pumpe (52) von ihrem Einlass (53) im zweiten Betriebsmodus angeordnet ist.

7. Hydraulische Anordnung (10, 50) nach einem der vorhergehenden Ansprüche, bei der:
- beide Pumpen (51, 52) mit einem Einlass (53) und mit einem Auslass (54) versehen sind,
- zwischen dem Auslass (54) der zweiten Pumpe (52) und der Hauptleitung (12) ein Einwegeventil (63) vorgesehen ist, das einen Hydraulikfluidstrom von dem Auslass (54) in die Hauptleitung (12) gestattet und einen rückwärts gerichteten Strom sperrt,
- ein federvorbelastetes Einwegeventil (65) zwischen dem Einlass (53) der ersten Pumpe (51) und der Fluidquelle (11) vorgesehen ist, das durch einen am Auslass (54) der zweiten Pumpe (52) herrschenden Druck (P52) mittels einer weiteren Aktivierungsleitung (66) des Steuermittels (60-69), die das Ventil (65) hydraulisch mit dem Auslass (54) der zweiten Pumpe (52) verbindet, hydraulisch aktiviert wird, wodurch ein Hydraulikfluidstrom von der Fluidquelle (11) zum Einlass (53) der ersten Pumpe (51) in Abhängigkeit von dem Druck (P52) gestattet oder gesperrt werden kann, und bei der
- das Schaltventil (60) zur hydraulischen Verbindung des Auslasses (54) der zweiten Pumpe (52) mit dem Einlass (53) der ersten Pumpe (51) im ersten Betriebsmodus und zur hydraulischen Trennung des Auslasses (54) von dem Einlass (53) im zweiten Betriebsmodus angeordnet ist.

8. Hydraulische Anordnung (10, 50) nach einem der vorhergehenden Ansprüche, bei der:
- beide Pumpen (51, 52) mit einem Einlass (53) und mit einem Auslass (54) versehen sind,
- zwischen dem Einlass (53) der zweiten Pumpe (52) und der Fluidquelle (11) ein Einwegeventil (67) vorgesehen ist, das einen Hydraulikfluidstrom von der Fluidquelle (11) zum Einlass (53) gestattet und einen rückwärts gerichteten Strom sperrt,
- das Schaltventil (60) zur hydraulischen Verbindung des Auslasses (54) der zweiten Pumpe (52) mit ihrem Einlass (53) im ersten Betriebsmodus und zur hydraulischen Trennung des Auslasses (54) der zweiten Pumpe (52) von ihrem Einlass (53) im zweiten Betriebsmodus angeordnet ist.

9. Hydraulische Anordnung (10, 50) nach einem der vorhergehenden Ansprüche, bei der:
- beide Pumpen (51, 52) mit einem Einlass (53) und mit einem Auslass (54) versehen sind,
- zwischen dem Einlass (53) der zweiten Pumpe (52) und der Fluidquelle (11) ein Einwegeventil (67) vorgesehen ist, das einen Hydraulikfluidstrom von der Fluidquelle (11) zum Einlass (53) im zweiten Betriebsmodus gestattet und einen rückwärts gerichteten Strom im ersten Betriebsmodus sperrt,
- das Schaltventil (60) als ein Entlastungsventil (14, 15) angeordnet ist, das eine Druckhöhe (P14; P16) in einem jeweiligen Abschnitt (14; 16) des Abführwegs (14, 16, 18) steuert, und bei der
- der Einlass (53) der zweiten Pumpe (52) mit dem jeweiligen Abschnitt (14; 16) hydraulisch verbunden ist.

10. Hydraulische Anordnung (10, 50) nach Anspruch 9, **dadurch gekennzeichnet, dass** die durch das Schaltventil (60) gesteuerte Druckhöhe (P14; P16) in Abhängigkeit von dem Hauptleitungsdruck (P12) gesteuert wird.

11. Hydraulische Anordnung (10, 50) nach Anspruch 10, **dadurch gekennzeichnet, dass** die durch das Schaltventil (60, 14) gesteuerte Druckhöhe (P14; P16) so gesteuert wird, dass sie etwas niedriger ist als der Hauptleitungsdruck (P12) und vorzugsweise zwischen 0,5 und 1,5 bar weniger beträgt.

12. Hydraulische Anordnung (10, 50) nach einem der vorhergehenden Ansprüche, **dadurch gekennzeichnet, dass** das Schaltventil (60) ein Proportionalventil ist, das ein allmähliches Schalten zwischen dem ersten und dem zweiten Betriebsmodus in Abhängigkeit von der Druckhöhe (P14, P16, P18) im Abführweg (14, 16, 18) bereitstellt.

## Revendications

1. Arrangement hydraulique (10, 50) comprenant un système d'activation hydraulique (10) pour activer un système à activer, notamment une transmission variable continuellement (1) telle que celle pour les véhicules transportant des personnes ou des marchandises comprenant une poulie primaire (2), une poulie secondaire (3) avec une courroie d'entraînement disposée entre les deux, l'arrangement hydraulique (10, 50) comprenant également un arrangement de pompe (50) pour décharger un débit de fluide hydraulique sous pression provenant d'une source de fluide (11) dans une ligne principale (12) du système d'activation (10), dans lequel une pression de ligne principale (P12) est commandée par le biais d'un détendeur de pression (13) de ligne principale qui relâche un surplus dudit débit de fluide hydraulique dans un trajet de décharge (14, 16, 18), l'arrangement de pompe (50) comprenant au moins une première pompe (51) et une deuxième pompe (52) dont le raccordement hydraulique peut être commuté entre un premier et un deuxième modes de fonctionnement de l'arrangement de pompe (50) au moyen de moyens de commande (60-69) de l'arrangement de pompe (50), **caractérisé en ce que** les moyens de commande (60-69) sont disposés pour commuter le raccordement hydraulique des pompes (51, 52) entre les premier et deuxième modes de fonctionnement de celles-ci en fonction d'un niveau de pression (P14, P16) qui est commandé dans le trajet de décharge (14, 16, 18).

2. Arrangement hydraulique (10, 50) selon la revendication 1, **caractérisé en ce que** dans le premier mode de fonctionnement, le débit de fluide hydraulique effectivement déchargé par l'arrangement de pompe (50) dans la ligne principale (12) est essentiellement déterminé par le fonctionnement de la première pompe (51) seulement et **en ce que** dans le deuxième mode de fonctionnement, ledit débit est déterminé par les deux pompes (51, 52) fonctionnant en parallèle.

3. Arrangement hydraulique (10, 50) selon la revendication 1, **caractérisé en ce que** dans le premier mode de fonctionnement, une différence entre une pression hydraulique qui règne à une entrée (53) et à une sortie (54) du fluide hydraulique de la deuxième pompe (52) est considérablement inférieure à une telle différence de pression au niveau de la première pompe (51) et **en ce que** dans le deuxième mode de fonctionnement, lesdites différences de pression sont approximativement égales.

4. Arrangement hydraulique (10, 50) selon la revendication 1, 2 ou 3, **caractérisé en ce que** ladite commutation est effectuée au moyen d'une vanne de commutation (60) qui est actionnée hydrauliquement par le niveau de pression (P14, P16, P18) dans le trajet de décharge (14, 16, 18) au moyen d'une ligne d'activation (64) des moyens de commande (60-69) raccordant hydrauliquement la vanne de commutation (60) avec une section respective (14, 16 ou 18) du trajet de décharge (14, 16, 18).

5. Arrangement hydraulique (10, 50) selon la revendication 4, **caractérisé en ce que** le trajet de décharge (14, 16, 18) est muni d'une pluralité de soupapes de surpression (15, 17) pour libérer une cascade de niveaux de pression contrôlés (P14 ; P16) dans les sections respectives (14 ; 16) du trajet de décharge (14, 16, 18) et **en ce que** la ligne d'activation (64) se raccorde au trajet de décharge (14, 16, 18) à une section (16) de celui-ci dans laquelle règne un niveau de pression commandé (P16) le plus bas dans l'arrangement (10, 50).

6. Arrangement hydraulique (10, 50) selon l'une quelconque des revendications précédentes, dans lequel :
- les deux pompes (51, 52) sont munies d'une entrée (53) et d'une sortie (54),
- une vanne unidirectionnelle (63) est prévue entre la sortie (54) de la deuxième pompe (52) et la ligne principale (12), permettant une circulation du fluide hydraulique de ladite sortie (54) jusque dans la ligne principale (12) et bloquant une circulation en sens inverse, et dans lequel
- la vanne de commutation (60) est disposée de manière à raccorder hydrauliquement la sortie (54) de la deuxième pompe (52) avec son entrée (53) dans ledit premier mode de fonctionnement et pour déconnecter hydrauliquement la sortie (54) de la deuxième pompe (52) de son entrée (53) dans ledit deuxième mode de fonctionnement.

7. Arrangement hydraulique (10, 50) selon l'une quelconque des revendications précédentes, dans lequel :
- les deux pompes (51, 52) sont munies d'une entrée (53) et d'une sortie (54),
- une vanne unidirectionnelle (63) est prévue entre la sortie (54) de la deuxième pompe (52) et la ligne principale (12), permettant une circulation du fluide hydraulique de ladite sortie (54) jusque dans la ligne principale (12) et bloquant une circulation en sens inverse,
- une vanne unidirectionnelle précontrainte à ressort (65) est prévue entre l'entrée (53) de la première pompe (51) et la source de fluide (11), laquelle est activée hydrauliquement par une pression (P52) régnant à la sortie (54) de la deuxième pompe (52) au moyen d'une ligne d'activation (66) supplémentaire des moyens de commande (60-69) qui raccorde hydrauliquement cette vanne (65) avec la sortie (54) de la deuxième pompe (52), autorisant ou bloquant une circulation du fluide hydraulique de la source de fluide (11) vers l'entrée (53) de la première pompe (51) en fonction de ladite pression (P52), et dans lequel
- la vanne de commutation (60) est disposée de manière à raccorder hydrauliquement la sortie (54) de la deuxième pompe (52) avec l'entrée (53) de la première pompe (51) dans ledit premier mode de fonctionnement et pour déconnecter hydrauliquement ladite sortie (54) de ladite entrée (53) dans ledit deuxième mode de fonctionnement.

8. Arrangement hydraulique (10, 50) selon l'une quelconque des revendications précédentes, dans lequel :
- les deux pompes (51, 52) sont munies d'une entrée (53) et d'une sortie (54),
- une vanne unidirectionnelle (67) est prévue entre l'entrée (53) de la deuxième pompe (52) et la source de fluide (11), permettant une circulation du fluide hydraulique de la source de fluide (11) vers ladite entrée (53) et bloquant une circulation en sens inverse, et dans lequel
- la vanne de commutation (60) est disposée de manière à raccorder hydrauliquement la sortie (54) de la deuxième pompe (52) avec son entrée (53) dans ledit premier mode de fonctionnement et pour déconnecter hydrauliquement la sortie (54) de la deuxième pompe (52) de son entrée (53) dans ledit deuxième mode de fonctionnement.

9. Arrangement hydraulique (10, 50) selon l'une quelconque des revendications précédentes, dans lequel :
- les deux pompes (51, 52) sont munies d'une entrée (53) et d'une sortie (54),
- une vanne unidirectionnelle (67) est prévue entre l'entrée (53) de la deuxième pompe (52) et la source de fluide (11), permettant une circulation du fluide hydraulique de la source de fluide (11) vers ladite entrée (53) dans ledit deuxième mode de fonctionnement et bloquant une circulation en sens inverse dans ledit premier mode de fonctionnement
- la vanne de commutation (60) est réalisée sous la forme d'une soupape de surpression (14, 15) qui commande un niveau de pression (P14 ; P16) dans une section respective (14 ; 16) du trajet de décharge (14, 16, 18), et dans lequel
- l'entrée (53) de la deuxième pompe (52) est raccordée hydrauliquement à ladite section respective (14 ; 16).

10. Arrangement hydraulique (10, 50) selon la revendication 9, **caractérisé en ce que** le niveau de pression (P14 ; P16) commandé par la vanne de commutation (60) est commandé en fonction de la pression de la ligne principale (P12).

11. Arrangement hydraulique (10, 50) selon la revendication 10, **caractérisé en ce que** le niveau de pression (P14 ; P16) commandé par la vanne de commutation (60, 14) est commandé de manière à être légèrement inférieur à la pression de la ligne principale (P12), de préférence d'entre 0,5 et 1,5 bar.

12. Arrangement hydraulique (10, 50) selon l'une quelconque des revendications précédentes, **caractérisé en ce que** la vanne de commutation (60) est une vanne proportionnelle qui réalise une commutation graduelle entre lesdits premier et deuxième modes de fonctionnement en fonction dudit niveau de pression (P14, P16, P18) dans le trajet de décharge (14, 16, 18).
